# EUROPEAN PATENT SPECIFICATION

(11) **EP 2 718 173 B1**
(45) Date of publication and mention of the grant of the patent: **21.09.2016**
(21) Application number: 12731661.0
(22) Date of filing: 08.06.2012
(51) Int. Cl.: B62K 21/02, B62K 21/18, B62K 21/06, B62J 99/00

(54) **BICYCLE FORK**
FAHRRADGABEL
FOURCHE DE BICYCLETTE

(30) Priority: 09.06.2011 IT VI20110152
(43) Date of publication of application: 16.04.2014
(73) Proprietor: Wilier Triestina S.p.A., 36028 Rossano Veneto (VI) (IT)
(72) Inventor: GENOVESE, Marco, I-36028 Rossano Veneto (VI) (IT); SALOMONI, Claudio, I-36100 Vicenza (IT)
(74) Representative: Bonini, Ercole
(86) International application number: PCT/IB2012/001110
(87) International publication number: WO 2012/168781

(56) References cited:
- EP-A1- 2 543 579
- EP-A2- 1 598 263
- EP-A2- 2 551 179
- WO-A1-2009/146552
- US-A1- 2004 188 976

## Description

The present invention concerns a bicycle fork, particularly suited to be used in racing bicycles, in particular in the so-called chrono bikes.

As is known, in racing bicycles and in particular in competition bicycles the aerodynamic characteristics are fundamental for obtaining high performance levels.

Therefore, in this type of bicycles the frame and the fork supporting the front wheel have such a shape as to increase aerodynamic penetration.

From this point of view, an important part of the frame is the head tube which is a cylindrical tubular body the inside of which is pivotally associated with a corresponding cylindrical portion of the fork, in such a way as to allow the bicycle to be steered.

As is known, the above mentioned cylindrical portion must feature high bending stiffness, especially on the vertical plane defined by the axis of the front wheel and by the rotation axis of the fork, where the stress produced by the force exerted by the cyclist on the handlebar ends is transmitted.

The stiffness of the fork is particularly important for competition bicycles, as it ensures the cyclist more sensitivity and therefore better control of the bicycle.

The above mentioned stiffness requisite is achieved by making the cylindrical portion and the head tube with sufficiently large diameters.

Obviously, a bigger size of the head tube causes the drawback of worsening the aerodynamic resistance of the bicycle.

In the attempt to limit the above mentioned aerodynamic resistance without reducing the stiffness of the fork, in a known embodiment the fork is provided with a tapered body that extends externally and frontally with respect to the head tube.

The above mentioned tapered body has the effect of guiding the air that flows around the fork at the height of the head tube, thus improving its aerodynamic penetration.

Furthermore, as the above mentioned tapered body rotates together with the fork, it always faces the direction from which the air flow comes, thus guaranteeing the same aerodynamic benefit with any steering angle.

However, the tapered body poses the drawback that it does not increase substantially the bending stiffness of the fork, since it has a limited extension in the direction orthogonal to said vertical bending plane.

In fact, the width of the tapered body is substantially equal to that of the head tube, in order to avoid increasing the front dimensions of the fork to the detriment of the aerodynamic performance.

Therefore, the embodiment described above does not appear to be completely satisfying from the point of view of aerodynamics and of the obtainable stiffness.

The embodiment described above poses the further drawback that the control cables connected to the handlebar, for example the brake cables or the gear cable, must run outside the frame for a considerable length, thus causing further aerodynamic resistance.

The drawback just mentioned above is partially overcome by a further known embodiment of the fork, disclosed for example in document WO 2009/146552, which discloses a bicycle fork according to the preamble of independent claim 1, and in which the cables are passed inside the fork at the height of the upper portion supporting the handlebar and exit from the fork in proximity to the head tube to be finally fitted into the latter through a lateral opening with which this is provided.

The embodiment just described above poses the drawback that it requires a lateral opening on the head tube for the passage of the cables, wherein said opening reduces the overall resistance and stiffness of the head tube.

Another drawback of said lateral opening lies in that the cable sheaths can wear out following steering manoeuvres, since their movement causes them to come in contact with the edges of the lateral opening, which makes the maintenance of the bicycle more complicated.

Furthermore, since the cables fit in the opening crosswise with respect to the head tube, the steering manoeuvres cause repeated bending of the cables and the respective sheaths, increasing the wear of the same.

The object of the present invention is to overcome all the above mentioned drawbacks that are typical of the known art.

In particular, it is a first object of the invention to provide a bicycle fork whose bending stiffness is higher than that of the forks of known type, without worsening its aerodynamic penetration.

It is also the object of the invention to provide a bicycle fork that, with the same bending stiffness, offers better aerodynamic performance than the forks of the known type.

It is a further object of the invention to prevent the wear of the sheath of the cables arranged through the fork.

The above mentioned objects are achieved by a bicycle fork constructed according to claim 1.

The above mentioned objects are also achieved by a bicycle comprising said fork, constructed according to claim 11.

Further characteristics and details of the fork and the bicycle that are the subject of the invention are described in the corresponding dependent claims.

Advantageously, the improvement in aerodynamic penetration ensured by the fork of the invention makes it possible to reduce the cyclist's efforts or, with the same efforts, to obtain better performance.

Still advantageously, the higher stiffness of the fork improves the cyclist's sensitivity, allowing him/her to have better control of the bicycle and therefore to manoeuvre it more precisely.

Furthermore, to advantage, less wear of the cable sheaths reduces the need for the corresponding maintenance operations.

The said objects and advantages, together with others which will be highlighted below, are illustrated in the following description of a preferred embodiment of the invention which is provided by way of non-limiting example with reference to the attached drawings, wherein:
- Figure 1 shows an axonometric view of a portion of a bicycle according to the invention;
- Figure 2 shows an axonometric view of the fork of the bicycle shown in Figure 1;
- Figure 3 shows a rear view of the fork shown in Figure 2;
- Figure 4 shows a cross section of the bicycle of Figure 1 along plane IV-IV of Figure 5;
- Figure 5 shows a cross section of the bicycle of Figure 1 along plane V-V of Figure 4;
- Figure 6 shows an exploded axonometric view of a portion of the bicycle shown in Figure 1.

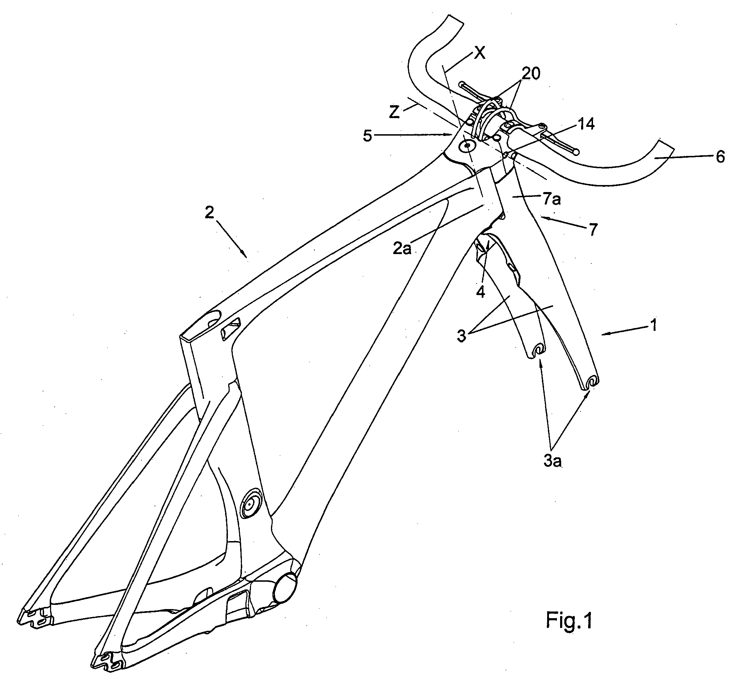

The bicycle according to the invention comprises a frame **2** provided with a head tube **2a** generically tubular in shape, with which a fork **1** is pivotally associated, as shown in Figure 1.

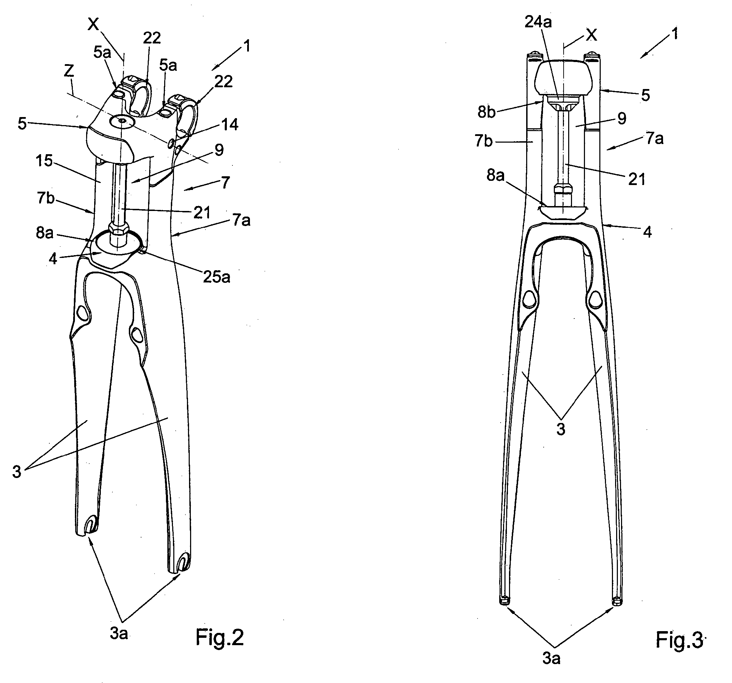

As shown in Figures 2 and 3, the fork **1** comprises two mutually facing arms **3,** each one of which is provided at one end with a seat **3a** suited to house a corresponding end of the hub of a wheel, not shown but known per se.

The fork **1** also comprises a connection body **4** that connects the above mentioned arms **3** in an intermediate point of the fork **1** and a fixing body **5** provided with means for fixing the handlebar **6.**

The fixing body **5** and the connection body **4** are mutually spaced and rigidly connected to each other through an intermediate body **7,** so that they face the respective ends of the head tube **2a.**

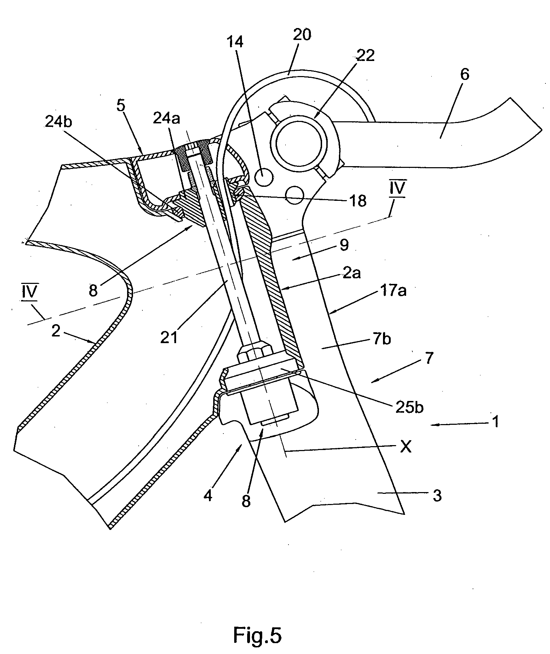

The fixing body **5** and the connection body **4** are pivotally connected to the head tube **2a** through corresponding connection means **8,** indicated in Figure 5, that define for the fork **1** a rotation axis **X** substantially aligned with the longitudinal axis of the head tube **2a.**

The pivotable connection means **8** comprise a first seat **8a** belonging to the connection body **4** and a second seat **8b** belonging to the fixing body **5** that face each other, as schematically shown in Figure 3.

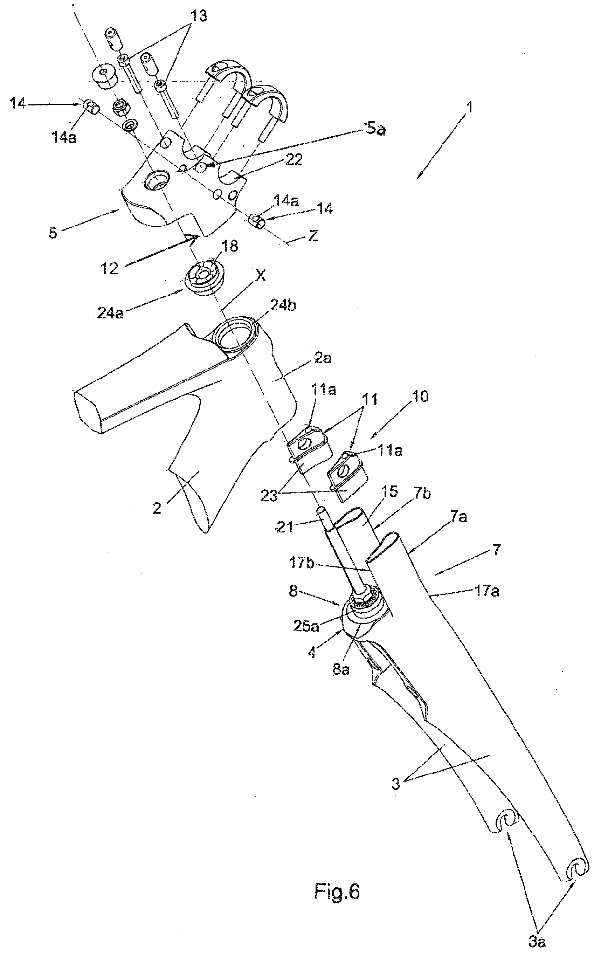

As shown in Figures 5 and 6, each one of the two seats **8a, 8b** is configured so that it houses a first annular body **24a, 25a** of a corresponding bearing, pivotally associated with a second annular body **24b, 25b** in turn associated with the corresponding end of the head tube **2a.**

The two first annular bodies **24a, 25a** are maintained against the corresponding second annular bodies **24b, 25b** by means of a preload screw **21** that is screwed so as to obtain correct preloading of the bearings.

As shown in Figure 5, the fixing body **5** comprises one or more through channels **18** in which it is possible to insert corresponding cables **20** originating from the handlebar **6,** for example the brake cables and/or the gear cables.

Each through channel **18** develops between an upper opening on the fixing body **5,** for the introduction of the cable **20** originating from the handlebar **6,** and a lower opening on the opposite side of the fixing body **5,** through which the cable **20** comes out of the fixing body.

According to the invention, each through channel **18** comprises a corresponding through hole that extends according to a direction parallel to the rotation axis **X** through the bearing **24a, 24b** associated with the fixing body **5.**

Since the lower opening of each through channel **18,** which corresponds to the lower end of each one of said through holes, is arranged within the perimeter of said second seat **8b,** it faces the corresponding end of the head tube **2a.**

Consequently, the cables **20** can pass through the through hole in the bearing **24a, 24b,** directly from the fixing body **5** to the head tube **2a** and, from there, to the remaining elements of the frame **2,** which are hollow and have their respective cavities in communication with each other and with the cavity of the head tube **2a.**

In this way, advantageously, the exposed portion of the cables **20** is reduced only to the length included between the handlebar and the fixing body **5,** thus making it possible to achieve the object of improving the aerodynamic characteristics of the bicycle.

Still advantageously, the reduced exposed length of the cables **20** at the level of the handlebar **6** improves the ergonomic characteristics of the bicycle.

Furthermore, the passage of the cables **20** through the bearing **24a, 24b** prevents them from getting into the head tube **2a** through the lateral surface of the latter, as in the known art, making them enter, instead, through its upper end, in a direction substantially parallel to the rotation axis **X** of the fork.

Therefore, advantageously, during the steering manoeuvres the cables **20** and the respective sheaths are not subjected to twists or wear due to contact with the head tube **2a,** since they move inside it and remain always substantially parallel to the rotation axis **X.**

Regarding the intermediate body **7,** it preferably comprises two elongated elements **7a, 7b** facing each other and mainly developed in a direction parallel to the rotation axis **X,** as shown in detail in Figures 2 and 3.

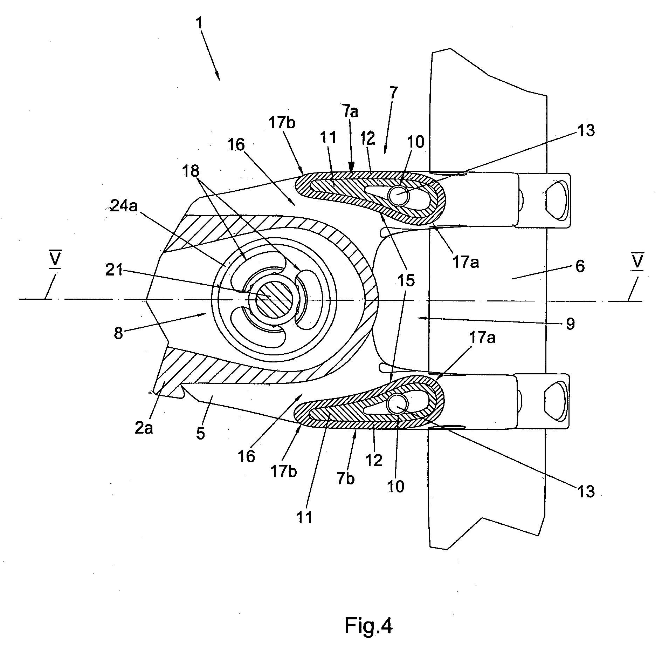

The elongated elements **7a, 7b** are spaced from the rotation axis **X** so that they face the head tube **2a** and are separated from each other by an intermediate channel **9** facing the head tube **2a,** as shown in the cross section of Figure 4.

The splitting of the intermediate body **7** in two distinct elongated elements **7a, 7b** arranged at a suitable mutual distance makes it possible to increase the stiffness of the intermediate body **7** and thus of the fork **1.**

At the same time, the intermediate channel **9** that separates the elongated elements **7a, 7b** reduces the cross section of the intermediate body **7,** allowing a certain quantity of air to pass through the latter so as to limit its aerodynamic resistance.

The invention thus achieves the object to provide a fork that, with the same aerodynamic penetration as that of analogous forks of the known type, is characterized by higher stiffness.

Advantageously, the higher stiffness of the fork **1** deriving from the spaced arrangement of the elongated elements **7a, 7b** increases the cyclist's sensitivity in relation to the handlebar **6** and control of the bicycle compared to those obtainable with the forks of the known type.

Analogously, the choice of a suitable distance between the elongated elements **7a** and **7b** makes it possible to reduce the cross section of the head tube **2a** without reducing the stiffness of the fork **1,** so as to further improve its aerodynamic efficiency and achieve another object of the invention.

Preferably, each elongated element **7a, 7b** comprises the extension of a corresponding arm **3** beyond the connection body **4** and up to the fixing body **5.**

Advantageously, the continuity between the arms **3** and the elongated elements **7a, 7b** makes it possible to transmit the stress from the fixing body **5,** to which the handlebar **6** is fixed, directly to the front wheel and vice versa, increasing the cyclist's sensitivity and control of the bicycle.

For the same purpose, each elongated element **7a, 7b** is preferably aligned with the corresponding arm **3** according to a single rectilinear direction of development.

In this way, advantageously, the force transmitted by the handlebar **6** to the front wheel put under stress the elongated elements **7a, 7b** and the arms **3,** mainly under traction and compression stress and, to a limited degree, under bending stress, thus increasing the cyclist's sensitivity.

According to a construction valiant, not illustrated herein, the intermediate body **7** comprises a single elongated element, preferably arranged in a symmetric position with respect to the arms **3.**

The description provided here below refers to the embodiment with two elongated elements but, obviously, the characteristics concerning each one of the two elongated elements **7a** and **7b** also apply to the single elongated element present in the embodiment just described.

Regarding the means for fixing the handlebar **6** to the fixing body **5,** as shown in Figure 2, they preferably comprise two annular seats **22** suited to house the handlebar **6,** respectively arranged at the ends of each elongated element **7a**, **7b**.

Advantageously, the connection of the handlebar **6** directly to the ends of the elongated elements **7a, 7b** further improves the cyclist's sensitivity in relation to the handlebar **6.**

Furthermore, preferably and as shown in Figure 4, the fixing body **5** is removably associated with the connection body **4** through connection means **10** that, advantageously, favour the coupling of the fork **1** at the two ends of the head tube **2a.**

Preferably, said connection means **10** comprise two shaped elements **11,** each one associated with a corresponding elongated element **7a, 7b.**

In particular, each shaped element **11** is slidingly associated with a corresponding reference element **12** belonging to the fixing body **5** according to an insertion direction **Z** that is substantially parallel to the rotation axis **X.**

Preferably, the reference element **12** is a housing obtained in the fixing body **5,** suited to accommodate the shaped element **11.**

Furthermore, preferably and as shown in the exploded view of Figure 6, the fixing body **5** comprises a portion of each elongated element **7a, 7b,** in which said housing is obtained.

The configuration mentioned above is particularly advantageous when the elongated elements **7a, 7b** are hollow, in which case their cavities can be used as housings for the shaped element **11.**

The connection between the fixing body **5** and each elongated element **7a, 7b** preferably takes place through a fixing screw **13** that is inserted in a through hole **5a** belonging to the fixing body **5** and screwed into a threaded hole **11a** obtained in a corresponding shaped element **11** and coaxial with said through hole **5a.**

Preferably, the shaped element **11** is the end of a prismatic body **23** whose cross section matches the cross section of the cavity of the corresponding elongated element **7a, 7b.**

The end of the prismatic body **23** opposing the shaped element **11** is slidingly inserted in the portion of the elongated element **7a, 7b** belonging to the connection body **4,** to which it is rigidly fixed, for example using glue.

The fact that the prismatic body **23** and the respective elongated element **7a, 7b** are distinct bodies allows the two parts to be made in different materials.

This is particularly advantageous if the fork **1** is made mainly with a composite material that, as is known, is a material that is scarcely suitable for obtaining threads.

In this case, the prismatic body **23** can be made, for example, in aluminium, which is suitable for making the threaded hole **11a** for coupling the fixing body **5.**

Preferably, the connection means **10** also comprise an insert **14** that is slidingly associated with a seat in the fixing body **5** according to a direction **Z** that intersects the axis of a corresponding through hole **5a.**

The above mentioned insert **14** is in turn provided with a through hole **14a** that can be arranged coaxial with the axis of the through hole **5a** of the fixing body **5.**

The insert **14** serves as an abutment element for the head of the fixing screw **13** and its presence is advantageous especially if the abutment for the head of the fixing screw **13** cannot be made directly in the fixing body **5,** as is the case for example if the fixing body **5** is hollow, which is normal in competition bicycles.

Regarding the elongated elements **7a, 7b,** as shown in Figure 4 the corresponding front edges **17a** are preferably arranged in a forward position with respect to the head tube **2a,** in such a way as to intercept the air that hits the corresponding areas and properly guide it around the head tube itself.

For this purpose, the elongated elements **7a, 7b** preferably have an elongated cross section in the direction of the air flow, so as to improve the aerodynamic penetration of the head tube area.

Furthermore, the surfaces **15** of the elongated elements **7a, 7b** that face the head tube **2a** are preferably concave, in such a way as to delimit, together with the surface of the head tube **2a,** corresponding curvilinear lateral channels **16** that communicate with the intermediate channel **9** and extend on the two sides of the head tube **2a.**

In this way, the air intercepted by the intermediate channel **9** is distributed in the above mentioned lateral channels **16** and flows towards the opposite side of the head tube **2a,** limiting the respective aerodynamic resistance effects.

Furthermore, preferably, the cross section profile of each elongated element **7a, 7b** is tapered starting from the edge **17a** facing the intermediate channel **9** towards the opposite edge **17b.**

Advantageously, owing to the presence of said taper the elongated elements **7a, 7b** feature a cross section profile that is particularly efficient from the aerodynamic point of view.

Furthermore, preferably, each elongated element **7a, 7b** has a convex external surface, so that its cross section profile resembles a wing-shaped profile, to the benefit of aerodynamic efficiency.

In practice, while the bicycle runs forward, the air that flows around the area of the head tube **2a** reaches the front edges **17a** of the elongated elements **7a, 7b** and is divided in three flows, two of which flow around the external surface of each elongated element **7a, 7b** while the third one penetrates the intermediate channel **9.**

The aerodynamic shape of the elongated elements **7a, 7b** makes it possible to guide said flows in an optimal manner, avoiding the formation of vortices and thus improving the aerodynamic penetration of the fork **1.**

The above clearly shows that the fork of the invention achieves all the set objects.

In particular, the spaced position of the two elongated elements makes it possible to increase the stiffness of the fork and thus to improve the cyclist's sensitivity.

At the same time, the intermediate channel between the elongated elements ensures the flow of part of the air that hits the fork, thus reducing the aerodynamic resistance of the latter.

Also the arrangement of the cables inside the frame for almost the entirety of their length contributes to reducing the aerodynamic resistance of the fork of the invention, in addition to improving the ergonomic characteristics of the bicycle.

Furthermore, the fact that the handlebar is connected directly to the ends of the elongated elements and that the latter comprise the direct extension of the arms of the fork makes it possible to transmit the stress directly between the handlebar and the wheel, further increasing the above mentioned sensitivity.

Further characteristics of the fork, even if they are neither described herein nor illustrated in the drawings, must all be considered protected by the present patent, provided that they fall within the scope of the following claims.

Where technical features mentioned in any claim are followed by reference signs, those reference signs have been included for the sole purpose of increasing the intelligibility of the claims and accordingly such reference signs do not have any limiting effect on the protection of each element identified by way of example by such reference signs.

## Claims

1. Bicycle fork (1) comprising:
- two mutually facing arms (3), each one provided at one end with a seat (3a) suited to house a corresponding end of a wheel hub;
- a connection body (4) suited to connect said two arms (3);
- a fixing body (5) spaced from said connection body (4) and rigidly connected to it through an intermediate body (7), provided with means for fixing a handlebar (6) and with a through channel (18) suited to house a cable (20);
- connection means (8) for the pivotable connection of said connection body (4) and of said fixing body (5) to a head tube (2a) of a frame (2) around a rotation axis (X), said connection means (8) comprising a first seat (8a) belonging to said connection body (4), with which a first bearing (25a, 25b) is associated, and a second seat (8b) belonging to said fixing body (5), with which a second bearing (24a, 24b) is associated, each one of said bearings (24a, 24b, 25a, 25b) being suited to be associated with a corresponding end of said head tube (2a),
said intermediate body (7) comprising two elongated elements (7a, 7b) facing each other, mainly developed in a direction parallel to said rotation axis (X), spaced from said rotation axis (X) so as to face said head tube (2a) when this is connected to said fork (1), and separated from each other by an intermediate channel (9) arranged so that it faces said head tube (2a) when this is connected to said fork (1),
**characterized in that** said through channel (18) extends through said second bearing (24a, 24b) to allow the passage of said cable (20) through said second seat (8b).

2. Fork (1) according to claim 1, **characterized in that** each one of said elongated elements (7a, 7b) comprises the extension of a corresponding one of said arms (3) from said connection body (4) to said fixing body (5).

3. Fork (1) according to claim 2, **characterized in that** each one of said elongated elements (7a, 7b) is aligned with the corresponding arm (3) according to a single rectilinear direction of development.

4. Fork (1) according to any of the claims from 1 to 3, **characterized in that** said elongated elements (7a, 7b) are provided with corresponding concave surfaces (15) facing and opposing each other with respect to the area occupied by said head tube (2a) when this is connected to said fork (1), in such a way as to define, between said concave surfaces (15) and said head tube (2a), corresponding lateral channels (16) in communication with said intermediate channel (9).

5. Fork (1) according to any of the claims from 1 to 4, **characterized in that** each one of said elongated elements (7a, 7b) has a cross section whose profile is tapered starting from the edge (17a) adjacent to said intermediate channel (9) towards the opposite edge (17b).

6. Fork (1) according to any of the preceding claims, **characterized in that** said means for fixing said handlebar (6) to said fixing body (5) comprise an annular seat (22) arranged at the end of each one of said elongated elements (7a, 7b) and suited to house said handlebar (6).

7. Fork (1) according to any of the preceding claims, **characterized in that** said fixing body (5) is removably associated with said connection body (4) through connection means (10).

8. Fork (1) according to claim 7, **characterized in that** said connection means (10) comprise a shaped element (11) belonging to each one of said elongated elements (7a, 7b) and a corresponding reference element (12) belonging to said fixing body (5), suitable for being slidingly associated with the respective shaped element (11) according to a direction that is substantially parallel to said rotation axis (X).

9. Fork (1) according to claim 8, **characterized in that** each one of said shaped elements (11) comprises a threaded hole (11a) and **in that** said fixing body (5) comprises a corresponding through hole (5a) suited to house a fixing screw (13) suited to be screwed into the respective threaded hole (11 a), each threaded hole (11 a) and the corresponding through hole (5a) being arranged so as to be coaxial when the respective shaped element (11) is coupled with the corresponding reference element (12).

10. Fork (1) according to claim 9, **characterized in that** said connection means (10) comprise an insert (14) slidingly associated with said fixing body (5) according to a direction (Z) that intersects the axis of a corresponding one of said through holes (5a), each insert (14) being provided with a corresponding through hole (14a) coaxial with the respective through hole (5a) of said fixing body (5).

11. Bicycle comprising a frame (2) provided with a head tube (2a) and a fork (1) pivotally associated with said head tube (2a), **characterized in that** said fork (1) is made according to any of the preceding claims.

12. Bicycle according to claim 11, **characterized in that** it comprises a cable (20) arranged through said through channel (18) and in said head tube (2a).

## Patentansprüche

1. Fahrradgabel (1), Folgendes umfassend:
- zwei zueinander gerichtete Arme (3), von denen jeder an einem Ende eine Aufnahme (3a) aufweist, die geeignet ist, ein entsprechendes Ende einer Radnabe aufzunehmen;
- einen Verbindungskörper (4), dazu geeignet, die besagten zwei Arme (3) zu verbinden;
- einen Befestigungskörper (5), der vom besagten Verbindungskörper (4) distanziert und über einen Zwischenkörper (7) starr mit ihm verbunden ist, versehen mit Mitteln zur Befestigung eines Lenkers (6) und mit einem Durchgangskanal (18), der geeignet ist, ein Kabel (20) aufzunehmen;
- Verbindungsmittel (8) zur um eine Drehachse (X) schwenkbaren Verbindung des besagten Verbindungskörpers (4) und des besagten Befestigungskörpers (5) an einem Gabelschaft (2a) eines Rahmens (2), wobei die besagten Verbindungsmittel (8) eine erste, zum besagten Verbindungskörper (4) gehörende Aufnahme (8a) umfassen, mit der ein erstes Lager (25a, 25b) verbunden ist, und eine zweite, zum besagten Befestigungskörper (5) gehörende Aufnahme (8b) umfassen, mit der ein zweites Lager (24a, 24b) verbunden ist, wobei jedes der besagten Lager (24a, 24b, 25a, 25b) geeignet ist, mit einem entsprechenden Ende des besagten Gabelschafts (2a) verbunden zu werden,
wobei der besagte Zwischenkörper (7) zwei längliche, zueinander gerichtete Elemente (7a, 7b) umfasst, die im Wesentlichen in einer zu der besagten Drehachse (X) parallele Richtung verlaufen, von der besagten Drehachse (X) distanziert sind, so dass sie zum besagten Gabelschaft (2a) gerichtet sind, wenn dieser mit der besagten Gabel (1) verbunden ist, und durch einen Zwischenkanal (9) voneinander getrennt sind, der so angeordnet ist, dass er zu dem besagten Gabelschaft (2a) gerichtet ist, wenn dieser mit der besagten Gabel (1) verbunden ist,
**dadurch gekennzeichnet, dass** der besagte Durchgangskanal (18) sich durch das besagte, zweite Lager (24a, 24b) erstreckt, um die Durchführung des besagten Kabels (20) durch die besagte, zweite Aufnahme (8b) zu erlauben.

2. Gabel (1) gemäß Patentanspruch 1, **dadurch gekennzeichnet, dass** jedes der besagten, länglichen Elemente (7a, 7b) die Verlängerung eines entsprechenden der besagten Arme (3) vom besagten Verbindungskörper (4) zum besagten Befestigungskörper (5) umfasst.

3. Gabel (1) gemäß Patentanspruch 2, **dadurch gekennzeichnet, dass** jedes der besagten, länglichen Elemente (7a, 7b) gemäß einer einzelnen, geradlinigen Verlaufsrichtung auf den entsprechenden Arm (3) ausgerichtet ist.

4. Gabel (1) gemäß eines jeden der Patentansprüche von 1 bis 3, **dadurch gekennzeichnet, dass** die besagten, länglichen Elemente (7a, 7b) entsprechende, konkave Oberflächen (15) aufweisen, die zueinander gerichtet und einander bezüglich des vom besagten Gabelschaft (2a) eingenommenen Bereiches entgegengesetzt sind, wenn der besagte Gabelschaft mit der besagten Gabel (1) verbunden ist, derart, dass zwischen den besagten, konkaven Oberflächen (15) und dem besagten Gabelschaft (2a) entsprechende, mit dem besagten Zwischenkanal (9) kommunizierende Seitenkanäle (16) definiert werden.

5. Gabel (1) gemäß eines jeden der Patentansprüche von 1 bis 4, **dadurch gekennzeichnet, dass** jedes der besagten, länglichen Elemente (7a, 7b) einen Querschnitt aufweist, dessen Profil sich ausgehend von der Kante (17a) neben dem besagten Zwischenkanal (9) zur entgegengesetzten Kante (17b) hin verjüngt.

6. Gabel (1) gemäß eines jeden der vorstehenden Patentansprüche, **dadurch gekennzeichnet, dass** die besagten Mittel zur Befestigung des besagten Lenkers (6) am besagten Befestigungskörper (5) eine ringförmige Aufnahme (22) umfassen, die am Ende jedes der besagten, länglichen Elemente (7a, 7b) angeordnet ist und geeignet ist, den besagten Lenker (6) aufzunehmen.

7. Gabel (1) gemäß eines jeden der vorstehenden Patentansprüche, **dadurch gekennzeichnet, dass** der besagte Befestigungskörper (5) durch Verbindungsmittel (10) abnehmbar mit dem besagten Verbindungskörper (4) verbunden ist.

8. Gabel (1) gemäß Patentanspruch 7, **dadurch gekennzeichnet, dass** die besagten Verbindungsmittel (10) ein geformtes Element (11) umfassen, das zu jedem der besagten, länglichen Elemente (7a, 7b) gehört, sowie ein entsprechendes Bezugselement (12), das zum besagten Befestigungskörper (5) gehört und geeignet ist, gemäß einer im Wesentlichen parallel zu der besagten Drehachse (X) verlaufenden Richtung gleitend mit dem entsprechenden, geformten Element (11) verbunden zu werden.

9. Gabel (1) gemäß Patentanspruch 8, **dadurch gekennzeichnet, dass** jedes der besagten, geformten Elemente (11) eine Gewindebohrung (11a) umfasst, und dadurch, dass der besagte Befestigungskörper (5) eine entsprechende Durchgangsbohrung (5a) umfasst, die geeignet ist, eine Befestigungsschraube (13) aufzunehmen, welche geeignet ist, in die entsprechende Gewindebohrung (11a) eingeschraubt zu werden, wobei jede Gewindebohrung (11a) und die entsprechende Durchgangsbohrung (5a) so angeordnet sind, dass sie koaxial sind, wenn das entsprechende, geformte Element (11) mit dem entsprechenden Bezugselement (12) gekuppelt ist.

10. Gabel (1) gemäß Patentanspruch 9, **dadurch gekennzeichnet, dass** die besagten Verbindungsmittel (10) eine Einsatz (14) umfassen, der gemäß einer die Achse einer entsprechenden der besagten Durchgangsbohrungen (5a) schneidenden Richtung (Z) gleitend mit dem besagten Befestigungskörper (5) verbunden ist, wobei jeder Einsatz (14) eine entsprechende Durchgangsbohrung (14a) aufweist, die koaxial zur entsprechenden Durchgangsbohrung (5a) des besagten Befestigungskörpers (5) ist.

11. Fahrrad, einen Rahmen (2) mit einem Gabelschaft (2a) und einer mit dem besagten Gabelschaft (2a) schwenkbar verbundenen Gabel (1) umfassend, **dadurch gekennzeichnet, dass** die besagte Gabel (1) gemäß eines jeden der vorstehenden Patentansprüche ausgeführt ist.

12. Fahrrad gemäß Patentanspruch 11, **dadurch gekennzeichnet, dass** es ein Kabel (20) umfasst, das durch den besagten Durchgangskanal (18) und im besagten Gabelschaft (2a) angeordnet ist.

## Revendications

1. Fourche de vélo (1) comprenant:
- deux bras (3) tournés réciproquement l'un vers l'autre, chacun est doté sur une extrémité d'un siège (3a) apte à accueillir une extrémité correspondante d'un moyeu de roue;
- un corps de raccordement (4) apte à relier lesdits deux bras (3);
- un corps de fixation (5) espacé dudit corps de raccordement (4) et relié de manière rigide à celui-ci par un corps intermédiaire (7), doté de moyens de fixation d'un guidon (6) et d'un canal passant (18) apte à accueillir un câble (20);
- des moyens de connexion (8) pour la connexion pivotable dudit corps de raccordement (4) et dudit corps de fixation (5) à un tube de direction (2a) d'un châssis (2) autour d'un axe de rotation (X), lesdits moyens de connexion (8) comprenant un premier siège (8a) appartenant audit corps de raccordement (4), auquel un premier roulement (25a, 25b) est associé, et un deuxième siège (8b) appartenant audit corps de fixation (5), auquel un deuxième roulement (24a, 24b) est associé, chacun desdits roulements (24a, 24b, 25a, 25b) étant indiqué pour être associé à une extrémité correspondante dudit tube de direction (2a),
ledit corps intermédiaire (7) comprenant au moins deux éléments allongés (7a, 7b) l'un en face de l'autre, développés essentiellement dans une direction parallèle audit axe de rotation (X), espacés dudit axe de rotation (X) de façon à résulter tournés vers ledit tube de direction (2a) quand celui-ci est relié à ladite fourche (1), et séparés l'un de l'autre par un canal intermédiaire (9) disposé de façon à être tourné vers ledit tube de direction (2a) quand celui-ci est relié à ladite fourche (1),
**caractérisée en ce que** ledit canal passant (18) s'étend à travers ledit deuxième roulement (24a, 24b) pour consentir le passage dudit câble (20) à travers ledit deuxième siège (8b).

2. Fourche (1) selon la revendication 1, **caractérisée en ce que** chacun desdits éléments allongés (7a, 7b) comprend l'extension d'un correspondant desdits bras (3) dudit corps de raccordement (4) audit corps de fixation (5).

3. Fourche (1) selon la revendication 2, **caractérisée en ce que** chacun desdits éléments allongés (7a, 7b) est aligné au bras correspondant (3) selon une direction de développement rectiligne unique.

4. Fourche (1) selon l'une quelconque des revendications de 1 à 3, **caractérisée en ce que** lesdits éléments allongés (7a, 7b) présentent des surfaces concaves correspondantes (15) tournées l'une vers l'autre et opposées entre elles par rapport à la zone occupée par ledit tube de direction (2a) quand celui-ci est relié à ladite fourche (1), de façon à définir, entre lesdites surfaces concaves (15) et ledit tube de direction (2a), des canaux latéraux correspondants (16) en communication avec ledit canal intermédiaire (9).

5. Fourche (1) selon l'une quelconque des revendications de 1 à 4, **caractérisée en ce que** chacun desdits éléments allongés (7a, 7b) présente une section transversale dont le profil est aminci à partir du bord (17a) adjacent audit canal intermédiaire (9) vers le bord opposé (17b).

6. Fourche (1) selon l'une quelconque des revendications précédentes, **caractérisée en ce que** lesdits moyens de fixation dudit guidon (6) audit corps de fixation (5) comprennent un siège annulaire (22) disposé à l'extrémité de chacun desdits éléments allongés (7a, 7b) et apte à accueillir ledit guidon (6).

7. Fourche (1) selon l'une quelconque des revendications précédentes, **caractérisée en ce que** ledit corps de fixation (5) est associé de manière amovible audit corps de raccordement (4) par des moyens de connexion (10).

8. Fourche (1) selon la revendication 7, **caractérisée en ce que** lesdits moyens de connexion (10) comprennent un élément galbé (11) appartenant à chacun desdits éléments allongés (7a, 7b) et un élément de référence correspondant (12) appartenant audit corps de fixation (5), indiqué pour être associé de manière coulissante à l'élément galbé correspondant (11) selon une direction qui est essentiellement parallèle audit axe de rotation (X).

9. Fourche (1) selon la revendication 8, **caractérisée en ce que** chacun desdits éléments galbés (11) comprend un trou fileté (11a) et **en ce que** ledit corps de fixation (5) comprend un trou passant correspondant (5a) apte à accueillir une vis de fixation (13) indiquée pour être vissée dans le trou fileté correspondant (11 a), chaque trou fileté (11a) et le trou passant correspondant (5a) étant disposés de façon à être coaxiaux quand l'élément galbé correspondant (11) est accouplé à l'élément de référence correspondant (12).

10. Fourche (1) selon la revendication 9, **caractérisée en ce que** lesdits moyens de connexion (10) comprennent une insertion (14) associée de manière coulissante audit corps de fixation (5) selon une direction (Z) qui entrecoupe l'axe d'un correspondant desdits trous passants (5a), chaque insertion (14) étant dotée d'un trou passant correspondant (14a) coaxial audit trou passant correspondant (5a) dudit corps d fixation (5).

11. Vélo comprenant un châssis (2) doté d'un tube de direction (2a) et d'une fourche (1) associés de manière pivotante audit tube de direction (2a), **caractérisé en ce que** ladite fourche (1) est réalisée selon l'une quelconque des revendications précédentes.

12. Vélo selon la revendication 11, **caractérisé en ce qu'**il comprend un câble (20) disposé à travers ledit canal passant (18) et dans ledit tube de direction (2a).
